# EUROPEAN PATENT APPLICATION

(11) **EP 2 270 729 A1**
(43) Date of publication of application: **05.01.2011**
(21) Application number: 09305646.3
(22) Date of filing: 03.07.2009
(51) Int. Cl.: G06Q 10/00

(54) **A method of assessing a supplier, corresponding computer program product, and data storage device therefor**

(71) Applicant: Alcatel Lucent, 75008 Paris (FR)
(72) Inventor: Salloum, Hicham, 28260 Bercheres sur vesgre (FR); De Corn, Benoit, 75017 Paris (FR)
(74) Representative: Brose, Gerhard

(57) **Abstract**

The invention concerns a method of assessing a supplier of a product, the method comprising the steps of measuring (101) a performance of product scope by the supplier and measuring (102) a performance of schedule by the supplier, wherein the performance of product scope and the performance of schedule are numerical and the method further comprises the step of calculating (103) an overall performance of the supplier based on the arithmetic mean of the performance of product scope and the performance of schedule. The invention further concerns a computer program product and a device therefor.

## Description

The invention relates to a method of assessing a supplier according to claim 1, a computer program product according to claim 9, and a data storage device according to claim 10.

Performance management is a forward-looking process for setting goals and regularly checking progress toward achieving those goals. In a cyclic feedback loop, the observed outputs of a system are continually measured and compared with the desired goals or outputs. Any discrepancy or gap is then fed back into changing the inputs of the process, so as to achieve the desired goals. Any such management control system involves communicating the required change and promptly taking action to effect the desired change. This helps the system or organization being managed to achieve the required goal or the strategic plan. Performance management has a wide variety of applications such as employee performance, software performance, business or corporate performance.

A key aspect of performance management is performance measurement. Whatever the process being driven with performance management, clear and concise measures are required in order to properly define the desired goals. Most performance management systems fail to achieve the desired goals of the process owner or project sponsor because goal measurement is ambiguous, not specific enough, poorly communicated or because results cannot be measured effectively.

Project performance management is a sub-discipline of project management that seeks to establish measurements of project performance, such as performance of project scope, performance according to a time schedule or performance according to a project budget. Such measurements may be used to inform project stakeholders, lead the project team and improve project performance.

Earned value management (EVM) is a conventional method of project performance management that is embraced by several project management methodologies. The publication "The contribution of earned value management to project success on contracted efforts: A quantitative statistics approach within the population of experienced practitioners" by Robert A. Marshall, Lille Graduate School of Management, provides an overview of EVM tools and techniques.

A particular downside of EVM is its inability to measure project quality. Thus, it is possible for EVM to indicate a project is under budget, ahead of schedule and fully executed in terms of its scope, yet unsatisfying for its clients and ultimately unsuccessful in its results.

It is thus an object of the invention to present an approach to project performance management that overcomes the aforementioned deficiencies, providing project managers and stakeholders with an integrated tool for measuring overall product quality and supplier performance. It is a further object to define a single measure representing this performance throughout the entire development cycle, that is, from contract signature to rollout of the completed product or service. Here, rollout is the act of introducing the deliverable into the marketplace.

This object is achieved by a method according to claim 1, a computer program product according to claim 9, or a data storage device according to claim 10.

A main idea of the invention is to introduce a metric for overall supplier performance that takes into account both its performance of product scope and its performance of schedule. Here, by metric is meant a measure for quantitatively assessing, controlling or selecting the supplier, along with the procedures to carry out measurements and the procedures for the interpretation of the assessment in the light of previous or comparable assessments. In business, this metric may be referred to as a key performance indicator (KPI).

Using the overall supplier performance as a KPI bears the further advantage of helping the supplier's business define and evaluate how successful it is in terms of making progress towards its long-term organizational goals. For example, the KPI may be monitored using business intelligence (BI) techniques to assess the present state of the organization's performance and to assist in prescribing a course of action. The act of monitoring KPIs in real-time is known as business activity monitoring (BAM). The KPI may further be tied to the organization's strategy using concepts or techniques such as the Balanced Scorecard. The Balanced Scorecard (BSC) is a performance management tool for measuring whether the smaller-scale operational activities of a company are aligned with its larger-scale objectives in terms of vision and strategy. Specifically, the KPI may be part of a measurable objective, which further comprises a direction, benchmark, target, and time frame. For example, using the KPI proposed above, the supplier's objective may be phrased "Increase overall performance from 75% to 80% by end of year 2009".

Further developments of the invention can be gathered from the dependent claims and the following description.

In the following the invention will be explained further making reference to the attached drawing.

To assess a supplier of a product according to an embodiment of the invention, a performance of product scope by the supplier and a performance of schedule by the supplier are measured, wherein the performance of product scope and the performance of schedule are numerical. Based on a numeric average such as the arithmetic mean of these measures, an overall performance of the supplier is calculated. By arithmetic mean is meant the sum of the performance of product scope and the performance of schedule divided by two.

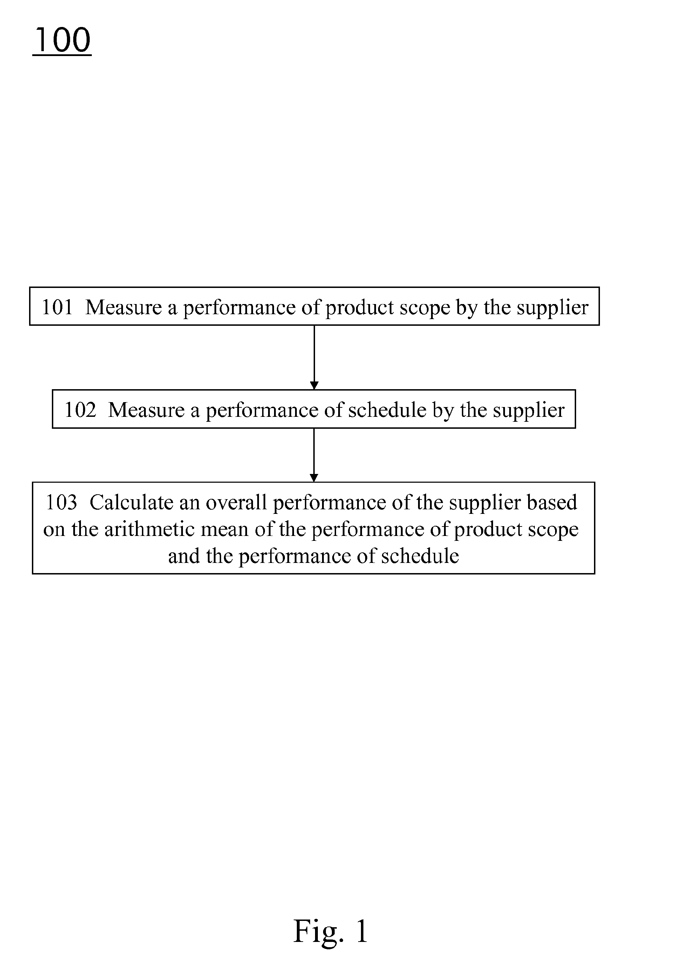

Fig. 1 shows a flowchart depicting a method according to an embodiment of the invention.

In the following, a method according to the invention is elucidated by way of example, referencing Fig. 1.

The flowchart 100 of Fig. 1 comprises a first step 101, a second step 102, and a third step 103 mutually connected by arrows indicating a preferred order of execution.

In the embodiment at hand, the method is performed by a software program run by a customer of the supplier. To provide the customer with a familiar user experience, the software program takes the form of a spreadsheet, that is, a computer application that simulates a paper worksheet. For improved clarity, the spreadsheet comprises multiple cells arranged in a grid of rows and columns, each cell containing either alphanumeric text or numeric values. To relieve the customer from the task of manually calculating the contents of a cell which is dependent from the contents of any other cell or combination of cells, some cells contain formulae whose result is re-determined upon modification of any of their input values.

For illustrative purposes, it is assumed that the product supplied is a deliverable of a project, that is, a collaborative enterprise, optionally involving research or design, which is planned to provide the committed product. More specifically, in project management, the project is a temporary endeavor undertaken to create the said product.

In the first step 101, the customer measures a performance of product scope by the supplier. Here, product scope is defined by the features and functions that characterize the product envisioned by the customer, that is, those features and functions that the supplier is expected to include in the product. By performance of product scope is thus meant the progress of the supplier toward the agreed-upon product scope.

To allow for a concise and reproducible result, the spreadsheet calculates the performance of product scope as the ratio of the delivered product scope to the committed product scope, each of which is in turn determined based on the number of product features and functions contained therein. As a simple example, the performance of product scope could be derived by dividing the number of product features delivered by the number of product features that the supplier committed to, assuming that the customer considers all product features equally important.

In an alternative embodiment, to cater for the possibility of retroactive changes in product scope, the spreadsheet subtracts the number of late customer requirements from the number of contractually committed features, using the balance as a divisor for the total number of features delivered by the supplier. Here, a customer requirement is considered belated if it is not articulated until the development or any subsequent project phase, provided that the affected deadlines have not been re-negotiated accordingly. By deadline is meant a narrow field of time that some sort of objective or task must be accomplished by. In project management, a deadline is most often associated with a milestone, that is, the end of a stage that marks the completion of a work package or phase.

To further reflect the expected burden imposed by such requirements, a so-called complexity factor is applied to each requirement according to the intricacy of the implementation and testing overhead it entails. For example, a factor of 0.5 may be attributed to a trivial requirement involving an effort of less than one person-week; a factor of 1 to an easy requirement involving an effort of one to two person-weeks; a factor of 3 to a complex requirement involving an effort of two to four person-weeks; and a factor of 5 to an extraordinarily intricate requirement involving more than four person-weeks of effort. By person-week is meant the amount of work performed by an average worker during one week, which is used for estimation of the total amount of uninterrupted labor required to perform the above-mentioned tasks.

To allow for an adequate consideration of customer priorities, the spreadsheet weights each product feature or function according to its predetermined priority when calculating performance of product scope. As an example, a high-priority feature may be attributed five times the weight of a low-priority feature, resulting in a more sophisticated result. Similarly, those features and functions delivered only partially are weighted according to their percentage of completion to allow for a fine-grained analysis. In an alternative embodiment, partially delivered features and functions are assigned a weight of 50 percent, notwithstanding their factual percentage of completion, for the sake of simplicity.

In the second step 102, the customer measures a performance of schedule by the supplier. Here, as customary in the project management discipline, by schedule is meant a list of the project's terminal elements, sometimes called work packages, along with their intended start and finish dates. The terminal elements are the lowest elements in the schedule, which is not further subdivided. Hence, by performance of schedule is meant the progress of the supplier toward meeting the agreed-upon schedule.

To provide a concise measure, the performance of schedule is based on the total project duration and the project slippage, if any, caused by the supplier. Here, by project slippage is meant a temporal deviation from the baseline entailing a delay in schedule, such deviation usually originated by missing a deadline. More specifically, the performance of schedule is calculated by subtracting the supplier-caused slippage from the project duration, then dividing the balance by the said project duration.

In an alternative embodiment, to reflect the fact that a certain delay has a greater impact if announced at short notice, the performance of schedule further takes into account the time lag between announcement and onset of project slippage. Put differently, supplier performance is rated higher the sooner the supplier advertises the envisaged delay. Specifically, each project slippage is divided by the squared time lag; the accumulated quotients are then triplicated and finally subtracted from a predetermined default such as 1.

In yet another embodiment, the performance of schedule is based on the schedule performance index (SPI) as defined in the context of EVM. Here, the SPI is a planned schedule efficiency factor representing the relationship between the earned value and the initial planned schedule. In EVM, SPI is determined as the ratio of the budgeted cost of work performed (BCWP) to the budgeted cost of work scheduled (BCWS), that is, the quotient of the cumulative budgeted value of work actually completed and the spending plan for the respective timeframe.

In the third step 103, the customer calculates an overall performance of the supplier based on the arithmetic mean of the performance of product scope measured in the first step 101 and the performance of schedule measured in the second step 102.

To allow for a finer-grained performance analysis, the spreadsheet calculates the overall performance of the supplier not only in respect of the entire project lifecycle from initiation to roll-out, but also separately in respect of the development, customer acceptance, and field trial project phases.

To quantify the threat or probability that project slippage may jeopardize the overall project objectives, the method according to the embodiment of the invention further comprises elements of risk analysis. In this context, by risk management is meant any technique to identify and assess factors that may compromise project success. To this end, at any point throughout the project, the customer identifies the potential project slippage, or apprehended delay, comparing it to the remaining project duration until delivery of the product. The result is used to attribute a certain measure of risk to the project, allowing the customer to take corrective action if considered necessary. More specifically, if the potential project slippage exceeds fifty percent of the remaining project duration, the spreadsheet declares a high risk, alerting the customer appropriately to call his or her attention to the exposure at hand. As a consequence, the customer may decide to mitigate the risk, applying, for example, additional resources to minimize, monitor, and control the probability or impact of project failure. The customer may use conventional risk management techniques, such as those established by the Project Management Institute, National Institute of Science and Technology, and International Organization for Standardization (ISO), in lieu of or in addition to the assessment above. Preferably, the risk analysis according to this embodiment is applied to critical projects or major releases of a given product. If, according to the result of the analysis, the customer considers such a project high-risk, he or she may tighten supervision over the supplier.

Adherence to the measures outlined above may allow the customer to avoid payments of compensation or contractual penalties such as liquidated damages. Resulting from the reduced operating expenses (OPEX), as a further benefit of this embodiment of the invention, the operating profit, also known as earnings before interest and taxes (EBIT), may be increased.

A person of skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of assessing a supplier of a product, the method comprising the steps of
measuring (101) a performance of product scope by the supplier and
measuring (102) a performance of schedule by the supplier,
wherein the performance of product scope and the performance of schedule are numerical,
**characterized in that** the method further comprises the step of calculating (103) an overall performance of the supplier based on the arithmetic mean of the performance of product scope and the performance of schedule.

2. A method according to claim 1, **characterized in that** the product is a deliverable of a project and the performance of schedule is based on a total project duration and a project slippage caused by the supplier.

3. A method according to claim 2, **characterized in that** the performance of schedule is further based on a time lag between an announcement of the project slippage and the onset of the project slippage.

4. A method according to claim 2, **characterized in that** the method comprises calculating (103) the overall performance of the supplier in respect of at least one of the following:
a development phase of the project,
a customer acceptance phase of the project,
a field trial phase of the project, and
an entire project life cycle.

5. A method according to claim 1, **characterized in that** the performance of product scope is measured (101) as a ratio of a delivered product scope to a committed product scope.

6. A method according to claim 4, **characterized in that** each product scope is calculated based on a number of product features, wherein each product feature is weighted according to its priorities.

7. A method according to claim 2, **characterized in that** the method further comprises the steps of
identifying a potential project slippage,
identifying a remaining project duration, and attributing a risk to the project based on the potential project slippage and the remaining project duration.

8. A method according to claim 1, **characterized in that** the overall performance of the supplier is calculated (103) by means of a spreadsheet.

9. A computer program product comprising computer-executable instructions for performing a method when the program is run on a computer, the method comprising the steps of
measuring (101) a performance of product scope by the supplier and
measuring (102) a performance of schedule by the supplier,
wherein the performance of product scope and the performance of schedule are numerical,
**characterized in that** the method further comprises the step of calculating (103) an overall performance of the supplier based on the arithmetic mean of the performance of product scope and the performance of schedule.

10. A device programmed or configured to perform a method comprising the steps of
measuring (101) a performance of product scope by the supplier and
measuring (102) a performance of schedule by the supplier,
wherein the performance of product scope and the performance of schedule are numerical,
**characterized in that** the method further comprises the step of calculating (103) an overall performance of the supplier based on the arithmetic mean of the performance of product scope and the performance of schedule.
